(19)

Europäisches Patentamt
European Patent Office
Office européen des brevets

(11)  **EP 3 454 336 B1**

(12)  **EUROPEAN PATENT SPECIFICATION**

(45) Date of publication and mention
of the grant of the patent:
**04.11.2020  Bulletin 2020/45**

(51) Int Cl.:
**G10L 19/005** *(2013.01)*    *G10L 25/12 (2013.01)*
*G10L 25/18 (2013.01)*    *G10L 19/02 (2013.01)*

(21) Application number: **18193942.2**

(22) Date of filing: **12.09.2018**

(54) **PACKET LOSS CONCEALMENT FOR CRITICALLY-SAMPLED FILTER BANK-BASED CODECS USING MULTI-SINUSOIDAL DETECTION**

PAKETVERLUSTVERDECKUNG FÜR KRITISCH ABGETASTETE FILTERBANKBASIERTE CODECS MIT MULTISINUSDETEKTION

DISSIMULATION DE PERTE DE PAQUETS POUR DES CODECS À BASE DE BANQUES DE FILTRES À ÉCHANTILLONNAGE CRITIQUE AU MOYEN D'UNE DÉTECTION MULTISINUSOÏDALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2017  PCT/CN2017/101426**
**01.11.2017  US 201762580313 P**
**14.11.2017  EP 17201565**

(43) Date of publication of application:
**13.03.2019  Bulletin 2019/11**

(73) Proprietors:
• **Dolby Laboratories Licensing Corporation**
**San Francisco, CA 94103 (US)**
• **Dolby International AB**
**1101 CN  Amsterdam Zuidoost (NL)**

(72) Inventors:
• **VILLEMOES, Lars**
**113 30 Stockholm (SE)**
• **HUANG, Shen**
**Beijing, 100022 (CN)**

(74) Representative: **Dolby International AB**
**Patent Group Europe**
**Apollo Building, 3E**
**Herikerbergweg 1-35**
**1101 CN Amsterdam Zuidoost (NL)**

(56) References cited:
**WO-A1-2014/108393    WO-A1-2014/202770**

• **"3rd Generation Partnership Project; Technical Specification Group Services and System Aspects; Codec for Enhanced Voice Services (EVS); Error Concealment of Lost Packets (Release 12)", 3GPP DRAFT; 26447-C70, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 9 June 2017 (2017-06-09), XP051289884, Retrieved from the Internet: URL:http://www.3gpp.org/ftp/tsg_sa/WG4_COD EC/Specs_update_after_SA76/ [retrieved on 2017-06-09]**
• **DAUDET L ET AL: "MDCT Analysis of Sinusoids: Exact Results and Applications to Coding Artifacts Reduction", IEEE TRANSACTIONS ON SPEECH AND AUDIO PROCESSING, IEEE SERVICE CENTER, NEW YORK, NY, US, vol. 12, no. 3, 1 May 2004 (2004-05-01), pages 302-312, XP011111119, ISSN: 1063-6676, DOI: 10.1109/TSA.2004.825669**

**Description**

TECHNICAL FIELD

Embodiments herein relate generally to audio signal processing, and more specifically to concealment of artifacts resulting from a loss of audio data packets encoded by critically-sampled transform during transmission over a packet-switched network.

SUMMARY OF THE INVENTION

Systems and methods are described for concealing packet loss in a received audio stream. Frames of the received audio stream may be stored in a buffer. In response to receiving a determination that a frame of the audio stream has been lost, a plurality of candidate frequency lines may be identified. The candidate frequency lines may be associated with sinusoids present in both a first frame and a second frame of the received audio stream, the first frame occurring two frames prior to the lost frame, the second frame occurring one frame prior to the frame including the lost frame. The candidate frequency lines may each having frequency line positions within associated frequency bins of the first frame that include the candidate frequency lines, the associated frequency bins each being associated with a fractional frequency with respect to an absolute center frequency bin of the first frame. Gains may be calculated for each of the candidate frequency lines between the first frame and the second frame. A plurality of candidate frequency lines are selected based on the calculated gains for the selected candidate frequency lines.

For a two-frame predictor, several different ways may be used to select the candidate frequency lines. In some embodiments, a plurality of frequency blocks may be identified in both the first frame and the second frame, the frames including a predetermined number of blocks. A prediction gain for each frequency line in a first block of the first frame may determined. A candidate frequency line in the first block having a) the greatest prediction gain in the block and b) having a prediction gain greater than a predetermined threshold is selected as a candidate frequency line. The prediction gain for each subsequent frequency line in the first frame is determined, with frequency lines having determined prediction gains greater than the predetermined threshold being selected as subsequent candidate frequency lines. Subsequent candidate frequency lines that are Np bins away from other selected candidate frequency lines are selected. When two candidate frequency lines are within Np bins of each other, the candidate frequency line having a greater prediction gain may be selected. In alternative embodiments, to reduce computational complexity, a pseudospectrum is determined for the first frame. Based on the pseudospectrum, bins having peak coefficient values are identified within the first frame, with a minimal peak distance of Np between identified bins. Within the identified bins, candidate frequency lines are identified, and pseudospectrum coefficient values are determined for each candidate frequency line. A candidate frequency line having a greatest coefficient value is selected for each identified bin.

A plurality of sub-band predictors for each selected candidate frequency line may then be selected from a database of predictor candidates based on the frequency line positions of the selected candidate frequency lines and the fractional frequencies of the associated frequency bins that include the selected candidate frequency lines. Each selected sub-band predictor may be defined as a function that is based on frequency, and the selected plurality of sub-band predictors may be arranged as a matrix having a size Np x Np, wherein Np is a predetermined number. The selected sub-band predictors for each selected candidate frequency line may then be applied to blocks of the second frame that include the associated frequency bins of the selected candidate frequency lines to obtain predicted sub-band coefficients, the predicted sub-band coefficients being used to reconstruct the lost frame. Additional embodiments may include using different packet loss concealment techniques to fill subsequent gaps in the audio stream (e.g. after three frames have been replaced using the above-described method).

In addition to the foregoing, single-frame based multi-sinusoid detection may be used to identify the plurality of frequency bins. When only one previous frame is available, a plurality of frequency bins corresponding to sinusoids within the previous frame may be extracted by converting sub-band coefficients of the previous frame to a pseudo spectrum. The candidate frequency lines may be selected from the pseudo spectrum based on the selected candidate frequency lines each having two successive harmonic peak distances above a predetermined threshold. Then, from a database of predictor candidates, a plurality of sub-band predictors may be selected based on absolute frequencies of the selected candidate frequency lines. As with the two-frame detection method described above, each selected sub-band predictor may have different coefficients, the selected plurality of sub-band predictors being arranged as a matrix having a size Np x Np. The selected plurality of sub-band predictors may be applied to blocks of the selected subset of frequency bins of the previous frame to obtain predicted sub-band coefficients, the predicted sub-band coefficients being inserted into the received audio stream in place of the lost frame.

The European search report (ESR) cites WO 2014/202770 A1, that describes an approach for obtaining spectrum coefficients for a replacement frame (m) of an audio signal. A tonal component of a spectrum of an audio signal is detected based on a peak that exists in the spectra of frames preceding a replacement frame (m). For the tonal component of the spectrum a spectrum coefficients for the peak (502) and its surrounding in the spectrum of the replacement frame (m) is predicted, and for the non-tonal component of the spectrum a non-predicted spectrum coefficient for the replacement frame (m) or a corresponding spectrum coefficient of a frame preceding the replacement frame (m) is used.

The ESR further cites "3rd Generation Partnership Project; Technical Specification Group Services and System Aspects; Codec for Enhanced Voice Services (EVS); Error Concealment of Lost Packets (Release 12)", 3GPP DRAFT; 26447-C70, that describes MDCT Frame repetition with sign scrambling, tonal MDCT concealment using phase prediction, MDCT frame repetition with random sign and gain scaling and MDCT frame repetition with sign prediction.

The ESR further cites DAUDET L ET AL: "MDCT Analysis of Sinusoids: Exact Results and Applications to Coding Artifacts Reduction", IEEE TRANSACTIONS ON SPEECH AND AUDIO PROCESSING, vol. 12, no. 3, that describes computing a pseudo-spectrum for MDCT coefficients which provides, at a low computational cost, a good approximation of the local spectrum of the signal, with an improved behavior with respect to frequency and phase than the classical MDCT spectrum, i.e. the absolute value of the coefficients.

BRIEF DESCRIPTION OF THE FIGURES

This disclosure is illustrated by way of example and not limitation in the figures of the accompanying drawings, in which like references indicate similar elements, and in which:

FIG. 1 shows a flow diagram for a method for concealing packet loss in a received audio stream using a two-frame multi-sinusoid detector, according to an embodiment.

FIG. 2 shows a simplified block diagram of a system for concealing packet loss in a received audio stream, according to an embodiment.

FIG. 3 shows plots of three consecutive frames of an audio stream, where the third frame is predicted using a method for packet loss concealment, according to an embodiment.

FIG. 4 shows plots of selected sub-band predictors used to perform packet loss concealment, according to an embodiment.

FIG. 5 shows a representation of selected frequency bins of a previous frame and the application of sub-band predictors to generate coefficients for a replacement frame, according to an embodiment.

FIG. 6 shows a flow diagram for method for concealing packet loss in a received audio stream using a single-frame multi-sinusoid detector, according to an embodiment.

FIG. 7 shows a plot illustrating impact of weight value on prediction error in a single-frame multi-sinusoid detector, according to an embodiment.

FIG. 8 shows a simplified block diagram of a plurality of frames where different types of packet loss concealment are applied, according to an embodiment.

FIG. 9 is a block diagram of an exemplary system for concealing packet loss using multi-sinusoid detection, according to an embodiment.

DETAILED DESCRIPTION

Packet loss may occur frequently in Voice Over Internet Protocol ("VoIP") or wireless voice communications under adverse connection conditions. Lost packets may result in clicks and pops or other artifacts that greatly degrade the perceived speech quality at the receiver side. To combat the adverse impact of packet loss, Packet Loss Concealment ("PLC") algorithms, also known as frame erasure concealment algorithms, may be utilized. Conventional PLC approaches typically attempt to predict the missing speech signal from the speech signal immediately preceding the dropout. These conventional approaches may be successful when the gaps are short (e.g., a few milliseconds) and occur at places in the speech signal that can be predicted well from past speech samples. However, when the gaps are longer or occur at a time when there is a transition in the speech signal, the concealment may fail, and the reconstructed speech may sound unnatural and slurred.

For packet loss concealment targeting Critically Sampled Transform ("CST") codecs such as the modified discrete cosine transform ("MDCT"), conventional algorithms (such as the 3GPP codec PLC described in 3GPP TS 26.410: "General audio codec audio processing functions; Enhanced aacPlus general audio codec; Floating point ANSI-C code", Jan. 2005, referred to as "3GPP PLC") may utilize packet repetition and shaped-noise insertion to estimate lost information only in the CST domain. Assuming CST coefficients of the p-th frame are lost, the parameters of the previous and next packet may be extracted by computing the spectral energy of CST coefficients in each scale factor band. After repeating the previous packet and applying scaling parameters from neighboring packets to the repeated packet, the final synthesis may be completed by assigning random signs to the repeated and scaled coefficients, as shown below in equation 1.

$$\overline{X}_p [k] = X_{p-1} [k] \, \hat{a}[k] \, s[k] \qquad\qquad (1)$$

In equation 1, $X_p [k]$ is the CST coefficient for $p$-th frame and $k$ th bin, $s[k]$ is a randomized sign and $\hat{a}[k]$ is the energy scaling factor computed in each scale band from both a previous and a future packet.

However, one of the drawbacks for the 3GPP PLC algorithm is that for tonal signals such as speech, the concealment may produce audible artifacts. To address this issue, other proposed solutions may use frame interpolation and magnitude scaling, where a look-ahead packet is required to eliminate the artifacts. However, waiting for a look-ahead packet to be received and then performing PLC is highly undesirable for real-time VoIP systems, which may have stringent latency requirements.

Another problem facing CST-domain PLC solutions is that incorrect signs of CST coefficients may also result in audible artifacts, especially in tonal bands. Many of the challenges in developing PLC for CST-based codecs stem from the fact that CST is a critically-sampled process. Inverse critically sampled transform-based reconstruction may require an anti-aliasing process because the time-domain signal synthesized from one packet may be incomplete/aliased unless another half-aliased signal from the lost packet is provided. When modified coefficients are inverse-transformed back to the time domain, Time Domain Aliasing Cancellation ("TDAC") properties may no longer be preserved, which can cause distortion artifacts to be created. This problem may be exacerbated during long burst loss, when distorted signals may be replicated or treated blindly using a conventional time domain method.

The solution described below includes a PLC algorithm for critically-sampled filter bank-based codecs, aiming at addressing the issues described above. The multi-sinusoidal detection-based PLC algorithm described herein is a causal algorithm that may provide accurate phase alignment to avoid creating audible artifacts when the audio stream is reconstructed. By using a critically-sampled filter bank, the solution may have access to time-frequency representations of the sinusoids, where both perceptual irrelevancy and signal redundancy can be exploited. Computing CST coefficients for random signals using numerical convolution may provide PLC without leading to perceptual artifacts. However, given that speech may include multiple analytic signals such as sinusoids, it may be more efficient to estimate the frequency coefficients by directly analyzing the analytic signal with the CST filter-bank.

The proposed approach extrapolates the CST coefficients of a lost frame by analytic prediction of multiple sinusoids, which using selected frequency parameters may result in near perfect phase alignment. A speech signal can be assumed, at least for small windows (e.g., 20 ms, as longer windows may contain warping, discontinuity, and/or branching of sinusoids) to be a combination of multiple sinusoids at a particular frequency range, where each sinusoid may be identified by numerical search and detection. The detection step may be determined by frequency resolution, and may be adaptive in run-time. Also, the frequency coefficients of periodic signals may be predicted using several key parameters. When the period is large compared to the extent of the filter bank window (e.g., 40 ms), a long-term predictor can be implemented in the discrete time domain by means of a shift or a fractional delay, and converted back into a causal predictor in the sub-band domain without causing aliasing artifacts. However, when the period is shorter than the filter-bank window length (e.g., when the signal has a fundamental frequency larger than 25 Hz), the multi-sinusoidal prediction may not be possible without causing some aliasing artifacts.

The proposed approach may utilize the causal predictor described above operating in CST-based filter-banks to provide PLC. After sub-band coefficients of a previous frame are received, the predictor may be applied at each frequency bin to obtain the sub-band coefficients for the next frame, thereby producing a set of alias-free sinusoid coefficients in the audio bitstream. If there is a bursty loss (i.e. subsequent lost frames after the predicted frame), for the rest of frames, another PLC algorithm may be utilized to mitigate any robotic-sounding artifacts. Overall, the proposed approach advantageously provides a causal PLC solution (i.e. the solution may depend only on CST coefficients of previous frames, so no look-ahead packets are used) with substantially zero delay. The proposed solution may also provide near alias-free PLC, for superior quality against any other known PLC algorithm for CST. Packet loss concealments can be manipulated in transform domain, which can be configured in a server or client without decoding to time samples. Furthermore, if more historical packets, look-ahead information in the next arrived packet, frame and band types, and/or time domain access are available, alternative embodiments may be utilized to achieve even greater performance.

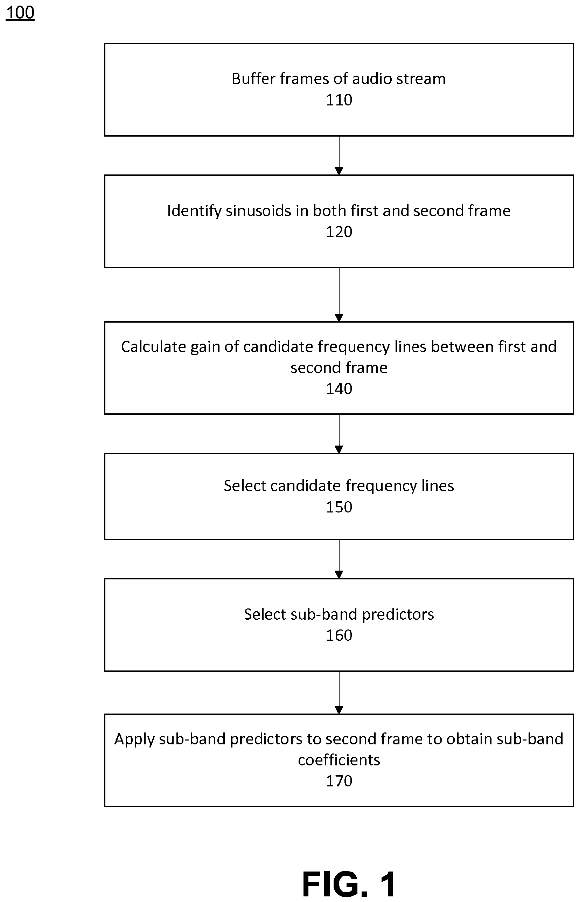

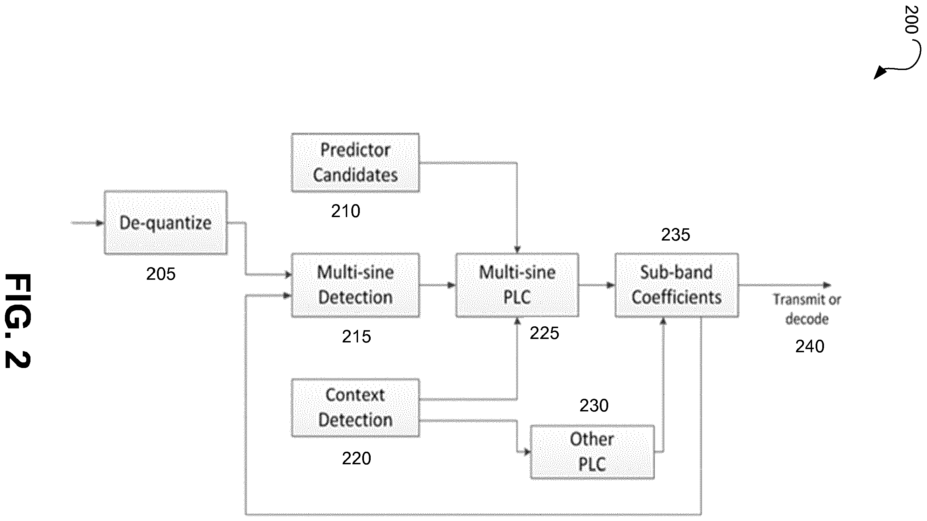

FIG. 1 shows a flow diagram for exemplary method 100 for concealing packet loss in a received audio stream, according to an embodiment. Method 100 uses a two-frame multi-sinusoid detector; however, as the description below shows, other multi-sinusoid detection techniques may be used. FIG. 2 shows a simplified block diagram of a system 200 for concealing packet loss in a received audio stream, according to an embodiment, using the method 100 described in FIG. 1. The exemplary PLC system 200 includes modules for audio stream de-quantization 205, multi-sine detection 215, predictor candidate storage 210, context detection 220, multi-sine PLC 225, other PLC 230, and sub-band coefficient generation 235.

In method 100, frames of the received audio stream may be de-quantized into CST sub-band coefficients at step 110 and stored in a buffer. This may be performed by de-quantization module 205 of system 200, for example. In response to receiving a determination that a frame of the audio stream has been lost, a plurality of sinusoids may be identified in the frames immediately preceding the lost frame at step 120. This multi-sinusoid detection may be performed by module 215 of system 200, using any of the methods of detecting multiple sinusoids described herein. Multi-sinusoid detection module 215 may obtain the sinusoid components in the audio stream, which includes: 1) how many frequency lines are going to be extrapolated in the lost signal; 2) frequency position of each frequency line.

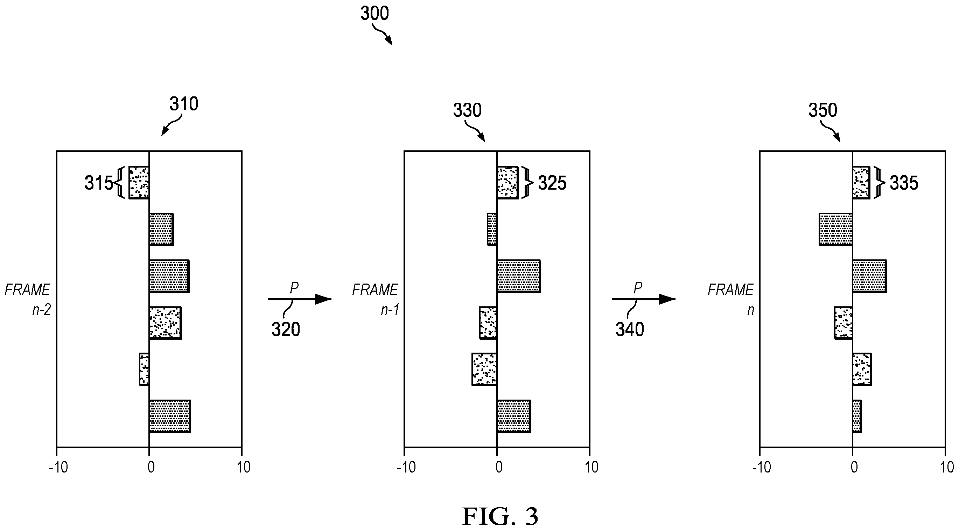

The exemplary method 100 uses a two-frame sinusoid detector in which the plurality of sinusoids are detected within a first frame of the received audio stream and a second frame of the received audio stream, where the first frame occurs two frames prior to the lost frame and the second frame occurs one frame prior to the lost frame. FIG. 3 shows plots 300 of three consecutive frames 310, 330, 350 of an audio stream, where the third frame 350 is predicted using a method for packet loss concealment, according to an embodiment. First frame 310 displays six extracted frequency bins, such as bin 315, while the x-axis measures the coefficient values of the frame within each bin. Likewise, figure 3 shows frequency bins 325, 335 of frames 330, 350, respectively. Two-frame multi-sinusoidal detection may be employed if the previous two packets satisfy two conditions, in some embodiments. First, both previous packets may be required to include tonal speech (i.e. speech with voice signals included). Any suitable measure may be used to determine if the first two frames both include tonal speech. For example, a "signal harmony ratio" of a pseudo spectrum of the CST coefficients of each of the first two frames may be determined and used to determine whether or not both of the first two frames include tonal speech, e.g. by determining whether the signal harmony ratio satisfies a threshold condition. See Sun, Xuejing: "Pitch Determination and Voice Quality Analysis using Subharmonic-to-Harmonic Ration", presented at the International Conference on Acoustics, Speech, and Signal Processing 2002. Other methods of determining the presence of tonal speech in the previous frames may include any voiced/unvoiced detection features of suitable voice activity detection (VAD) products, including using a prediction gain of a long-term predictor, using a zero-crossing rate of the speech waveform in the previous frames, or using machine learning methods. Second, both previous frames should be transmitted frames within the audio stream, meaning that both first frame 310 and second frame 330 of the frames were not produced using PLC techniques.

After enumerating all the blocks to the end of the CST coefficients in that frame, an absolute prediction gain is calculated for each frequency line in the first frame at step 140. An exemplary formula that may be used to determine the gain for a frequency line is shown in equation 2:

$$G = \|y_{\text{block}}\|^2 - S \qquad\qquad . \qquad\qquad (2)$$

Here, $y_{\text{block}}$ is a block of target CST coefficients from Np consecutive bins, and S is as a measure of the error of predicting $y_{\text{block}}$ from a corresponding block $x_{\text{block}}$ of source CST coefficients. One embodiment of S is given by Equation 3.

At step 150, candidate frequency lines may be selected based on the calculated gains. There are several different methods that may be used to select the candidate frequency lines. In detecting the multiple sinusoids, an objective may be to select a set of frequency lines that can optimally predict modulation of the periodical speech signal from frame n-2 310 to frame n 350. By extrapolating based on the optimal frequency lines, a more accurate prediction of frame n 350 using PLC may be obtained.

In some embodiments, a full search method may be employed, where all frequency lines in a frame are examined to identify a plurality of candidate frequency lines. To detect the plurality of sinusoids, a predetermined number of frequency blocks may be identified within both the first frame 310 and the second frame 330. Each de-quantized frame may be divided into *Lb* frequency blocks, each frequency block including a window span of *Np* bins, each bin including a range of frequencies. Assuming two preceding frames x *n-2* 310 and y *n-1* 330 are available in the buffer, the detector 215 may also extract CST coefficients from 0 to *Lb-1* for each frame. In the examples discussed below, *Np* = 3 bins; however, any suitable window span may be used, both greater and less than 3. Also, the bins in the examples below each cover a range of 25 Hz; however, any suitable bin size may be utilized. For each CST coefficient block of *Np* bins, the goal is to identify the transform function *P(f)* 320, 340 that minimizes the value of S in equation 3:

$$S = \|y_{\text{block}} - P(f)x_{\text{block}}\|^2. \tag{3}$$

The predictor transform function $P(f)$ may be defined from absolute frequency candidate lines in the central bin of each block, as described below.

In some embodiments, the calculating the gains for the frequency lines and the candidate frequency line selection may be performed for each identified frequency line in the first frame, or on a block-by-block basis. For example, a gain for each frequency line in a first bin of a first block of the first frame may determined. A frequency line in the first block having a) the greatest gain in the block and b) having a gain greater than a predetermined threshold may be identified as a candidate frequency line. The gain for each subsequent frequency line in the first frame may then be determined, with frequency lines having determined gains greater than the predetermined threshold being identified as subsequent candidate frequency lines. Subsequent candidate frequency lines that are Np bins apart from other candidate frequency lines may be selected. When two candidate frequency lines are within Np bins of each other, the candidate frequency line having a greater gain is selected. This may advantageously avoid overlapping of any sinusoids when predictions are made. The predetermined threshold gain value may be any suitable value. For example, candidate frequency lines may be used for PLC only where the prediction gain for the block containing the selected candidate frequency line is at least 0.1dB of $\|y_{\text{block}}\|^2$. This is to select a set of blocks which will contain significant sinusoids that may be well-predicted using the selected optimal predictor. While the full-search method may be very accurate at identifying sinusoids that are useful for PLC, the full-search method may be computationally intensive. The full search, which may be done in a single pass as described above or in two loops (an outer loop identifying each central bin candidate frequency line, and an inner loop that reduces the number of selected candidate frequency lines to one per Np frequency bins), may have a complexity of $Lb$ x $Np$ x $Fp$ (where $Fp$ is the frequency step size - the interval between frequency lines). While this may be practical for offline PLC, computational complexity reductions may be desirable for real-time applications.

In alternative embodiments, to reduce computational complexity, a second method may be used to detect the multiple sinusoids. Referred to herein as a hybrid frame detector (since it utilizes aspects of the full-search method described above and the one-frame detector described below), a pseudospectrum may be determined for the first frame (see below for further discussion of a pseudospectrum). Based on the pseudospectrum, bins of the first frame having peak coefficient values may be identified. Similar to the full-search method, a minimal peak distance of Np bins between identified bins may be utilized, to avoid overlap. Within the identified bins, candidate frequency lines may be identified, and gains may be determined for each candidate frequency line. A candidate frequency line having a greatest gain is selected for each identified bin. Since there is no need to determine the gains for every frequency line in the first frame (gains are only determined for frequency lines within identified bins), significant computational savings may be realized, with only a minor loss in prediction quality.

The selected candidate frequency lines may each be associated with sinusoids and may have a frequency line position within a central bin (also referred to herein as an associated frequency bin of the selected candidate frequency line) of a block spanning Np frequency bins. In an exemplary embodiment, once the selected candidate frequency lines are identified in step 150, the bins containing the selected candidate frequency lines may be regarded as center bins of Np-bin blocks that include the selected candidate frequency line. The frequency line position for a candidate frequency line within the center bin may be expressed in terms of a fractional number between -0.5 to 0.5 relative to an absolute center frequency of the block that includes the selected candidate frequency line. For example, a bin may be expressed as Fp points uniformly spaced on the interval from -.5 to .5 with step size 1/Fp. Examples of Fp that may be used are 8, 16 and 32. As a good example one would choose $(\nu+0.5)/Fp$ to represent the absolute center frequency of the block that includes the selected candidate frequency line, where the bin index $\nu$ = -Fp/2,..(Fp/2-1). As will be described below, the frequency line position may be used to select sub-band predictors used for PLC.

Returning to FIGs. 1 and 2, once the plurality of candidate frequency lines have been selected from the set of all candidate frequency lines, a plurality of sub-band predictors may be selected from a database of predictor candidates based on the frequency line positions of the selected candidate frequency lines and the bin indexes of the center bins that include the selected candidate frequency lines at step 160. Step 160 may be handled by multi-sine PLC module 225, which may retrieve the sub-band predictors from a predictor candidate database 210. The predictor candidate database 210 may be stored externally to the multi-sine PLC module 225 (as shown in FIG. 2) or may be internal to the multi-sine PLC module 225 in some embodiments.

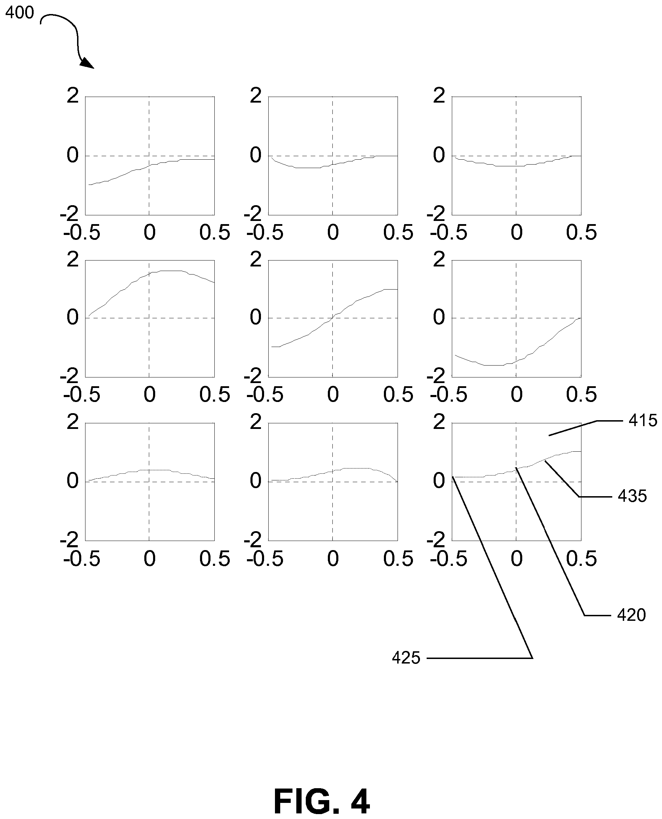

FIG. 4 shows plots 400 of selected sub-band predictors used to perform packet loss concealment, according to an embodiment. The sub-band predictors may be mean squared error (MSE) optimal predictors based on a stationary stochastic signal model. The model represented by the sub-band predictors may be a relaxed version of a sinusoidal signal model also known as a line spectral process. Derivation of the sub-band predictors is described further below, in the discussion of equations 4-6.

In the example shown in FIG. 4, the window size Np is three blocks. Each selected sub-band predictor may be defined as a function that is based on frequency and the bin indexes of the center bin containing the selected candidate frequency line. The bin indexes of the center bins may affect the sign of the selected sub-band predictors for the center bins. If the selected candidate frequency line's corresponding frequency is changed by the equivalent of an even number of MDCT frequency bins, the selected sub-band predictor may be used as-is. However, if the selected candidate frequency line's corresponding frequency is changed by an odd number of MDCT frequency bins, the sign of the selected sub-band predictor for that center bin is inverted.

The selected plurality of sub-band predictors may be arranged as a matrix having a size Np x Np, as shown in FIG. 4. The sub-band predictors may be selected from a candidate pool of predictors based on a) including cross-band; and b) reliance on only previous frames (as opposed to previous and look-ahead frames). In the example of FIG.4, for a 3x3 predictor having a given frequency parameter, the sub-band with the nearest center frequency may be selected as central target sub-band. The fractional frequency of each block ranging from -0.5 to 0.5 is depicted by the abscissas of the nine graphs, which produces a 3 x 3 matrix of coefficients to be applied to the previous frame in the corresponding sub-band coefficients block with central frequency and its two neighboring coefficients. For example, if a fractional frequency of a block containing a selected candidate frequency line is -0.5, then the ordinate of the location 425 of the coefficient graph 415 yields the value of the element in third row and third column of the predictor matrix for the selected candidate frequency line. Similarly locations 420 and 435 correspond to predictor matrix element values for fractional frequencies of zero and 0.25 respectively.

The $Np$ x $Np$ predictor matrices may be pre-calculated in the database, which occupies a table size of $Fp$ x $Np$ x $Np$, where $Fp$ is the frequency sampling resolution (i.e., how many frequency values are distributed between -0.5 and 0.5). The sub-band predictor selection may be based on the theory that sinusoid signal with known frequency $\Omega$ and random phase $-\pi<\theta<\pi$ can be modeled as:

$$x(t)=cos(\Omega t+ \theta); \qquad (4)$$

its auto-correlation function may accordingly be:

$$r(\tau)=cos(\Omega\tau); \qquad (5)$$

or it can be relaxed with:

$$r(\tau)=e^{-\xi|\tau|} cos(\Omega\tau). \qquad (6)$$

Suppose that the sub-band coefficient $X_a = \langle x, w_\alpha \rangle$, defined by the inner product of x and the CST analysis waveform $w_\alpha$ is to be estimated by a linear combination of a collection of sub-band coefficient $X_b$ represented by $\{\langle x, w_\beta \rangle : \beta \in B\}$ :

$$\langle x, w_\alpha \rangle \approx \sum_{\beta \in B} c_\beta \langle x, w_\beta \rangle. \qquad (7)$$

The mean value of the squared prediction error may be given by

$$\mathrm{E}\left\{\left(\sum_{\beta \in B} c_\beta \langle x, w_\beta \rangle - \langle x, w_\alpha \rangle\right)^2\right\} = \sum_{\beta,\gamma \in B} c_\gamma R_{\gamma\beta} c_\beta - 2\sum_{\beta \in B} R_{\alpha\beta} c_\beta + R_{\alpha\alpha} \qquad (8)$$

Where $R_{\alpha\beta}$ is the covariance matrix of $\langle x, w_\alpha \rangle$ and $\langle x, w_\beta \rangle$.

The least mean square error (MSE) solution of the above formula to derive $c_\beta$ is obtained by solving the normal equations for the prediction coefficients $c_\beta$,

$$\sum_{\beta \in B} R_{\gamma\beta} c_\beta = R_{\gamma a}, \quad \gamma \in B \,. \tag{9}$$

Then the right hand of the MSE formula may be reduced to:

$$R_{\alpha\alpha} - \sum_\beta R_{\alpha\beta} c_\beta \,. \tag{10}$$

In general, it may be difficult to derive the two covariance matrices to calculate c. However, for a sinusoid signal and a modulated CST such as the Modified Discrete Cosine Transform (MDCT), the two covariance matrices can easily be derived and used to tabulate a prediction matrix $(-1)^k P(f)$ for $f$ in steps of $1/Fp$, $P(f)$ may be calculated as follows. Below, $L$ is the transform size of the CST.

- The exact frequency may be determined using the central frequency for the entire frame plus fractional frequency $f$:

$$\Omega = \pi(m+0.5+f)/L, \text{ where } m \text{ is the central bin index;} \tag{11}$$

- An auto-correlation function may be calculated for the sinusoid signal model and its shifts by one frame in the forward and backward directions, respectively:

$$r(\tau) = e^{-\xi|\tau|} \cos(\Omega\tau) \tag{12}$$

$$rf(\tau) = e^{-\xi|\tau+L|} \cos(\Omega(\tau+L)); \tag{13}$$

$$rb(\tau) = e^{-\xi|\tau-L|} \cos(\Omega(\tau-L)); \tag{14}$$

To derive a $Np \times Np$ predictor for two successive CST coefficients, $X_n(i)=1$ for $i=m+n$ and zero otherwise.
- For $1 \le n \le Np$, calculate time domain samples via inverse CST:

$$s_n = ICST(X_n), \tag{15}$$

and compute the cross correlation of the waveforms $r_{ba} = s_b * \breve{s}_a$, $1 \le a \le Np$, $1 \le b \le Np$.
- Form covariance matrices $R_{xx}$ and $R_{yx}$ with components:

$$R_{xx}(b,a) = \langle r, r_{ba} \rangle \; ; \tag{16}$$

$$R_{yx}(b,a) = \begin{cases} \langle rf, r_{ba} \rangle, & \text{if forward PLC is performed;} \\ \langle rb, r_{ba} \rangle, & \text{if backward PLC is performed.} \end{cases} \tag{17}$$

Here the inner products are centered such that $\tau = 0$ corresponds to the middle sample of $r_{ba}$.
- Then the predictor table for fractional frequency $f$ is calculated as:

$$P(f) = e^{\xi L} R_{yx} R_{xx}^{-1} \,. \tag{18}$$

For greater detail on the derivation of exemplary predictor tables, also see Villemoes, Lars, Model Based Prediction in a Critically Sampled Filterbank, Patent Cooperation Treaty Application No. WO 2014/108393 A1, filed January 7, 2014.

Returning to FIGs. 1 and 2, the selected plurality of sub-band predictors may then be applied to blocks of the selected subset of frequency bins of the second frame to obtain predicted sub-band coefficients at step 170, where the predicted sub-band coefficients may be inserted into the received audio stream in place of the lost frame. For speech signals, which are linear combinations of single sinusoids, it's simple to overlap-add all the predicted sub-band coefficients from single sinusoid predictor; however, as described above, a stride requirement of Np bins between selected candidate frequency lines may be used to prevent overlap.

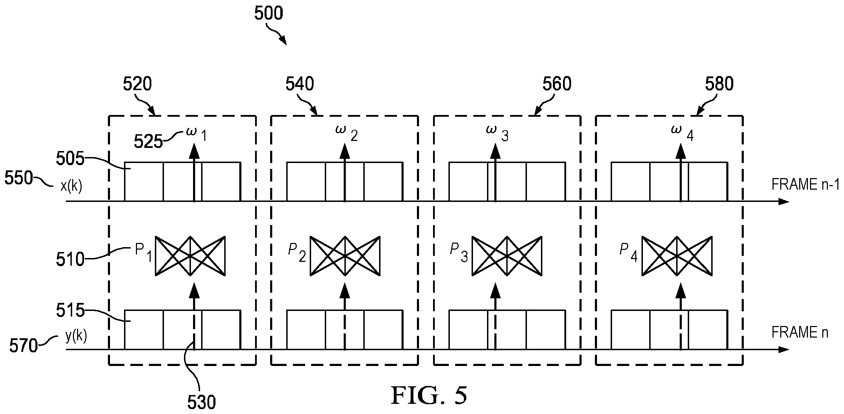

FIG. 5 shows a representation 500 of selected frequency blocks 520, 540, 560, and 580 of a previous frame 550 and the application of sub-band predictors $P_1$-$P_4$ to generate coefficients for a replacement frame 570, according to an embodiment. For the multiple sinusoid signals shown in blocks 520, 540, 560, and 580 (e.g., frequency line 525 in block 505), each sinusoid will be propagated to the corresponding blocks 515 of width Np by using the fractional frequency line position as input for the predictor candidate table 400. The anticipated block 515 may include calculated sinusoid value 530. A Np x Np prediction matrix 510 is thereby determined for the selected frequency bin having values calculated by each selected sub-band predictor function. The process is repeated and added for all the sinusoidal components in the signal model. It's recommended (but not restricted to) use the parameter Np=3, which corresponds to a 75 Hz frequency spacing for a configuration with a transform stride of 20 ms.

To apply the sub-band predictors to the first frame, in an exemplary embodiment the central bin containing ω1 in FIG. 5 may be identified. The identified central bin may define the Np-bin block around selected candidate frequency line ω1. The fractional frequency position f of ω1 relative to the middle bin center frequency for the entire frame may then be determined. Based on the determined fractional frequency with respect to the middle bin center frequency for the entire frame, the tabulated sub-band predictor $P(f1)$ with f1 closest to f may be looked up in the sub-band predictor database. Finally, before applying the sub-band predictor, a sign of the sub-band predictor may be determined depending on the parity of the central bin. For example, a factor of $(-1)^k$ may be multiplied by $P(f1)$, as described previously based on the fractional frequency position f of the located central block. The resulting Np x Np matrix may be applied to the Np block of frame n-1 to get the predicted Np block of frame n. The applying the sub-band predictors may be repeated for ω2, ω3 etc.

Moreover, in order to make a smooth transition, for unaffected coefficients, a simple repetition of corresponding sub-band coefficients in previous frame may be conducted in addition with scrambling signs. This is to ensure that it is consistent with what would be reasonable and natural in that spectral hole. In FIG. 5, this simply means that the bins between anticipated blocks 560 and 580, for example, would have coefficients that are substantially duplicated from frame n-1.

Returning to FIG. 2, in some embodiments, based on the above results in addition with some extra information such as masker types, frame types, time positions that are provided by the module "context detection" 220, corresponding sub-band predictors are selected from the predictor candidates database 210 which may be created at the initialization stage. Context detection may provide guided prior information to perform PLC, which includes:

- Previous available frame count N will determine whether two frame detector or one frame detector is going to be chosen;

- Frame type information, such as consonant, vowel, fricative or plosive tag of the frame, pitch and harmonics position and volume, will guide the frequency resolution and band chosen in fractional frequency detector;

- Store some statistics about instant rate of speech, and record concealment position after the previous received frame: For a very fast speech, multi-sine prediction will be performed for the first lost frame, and rest frames will be concealed by other PLC approaches which is more diffuse; For a slow speech, multi-sine prediction will exist for two or three frames; It should be noticed that for this causal PLC, a maximum concealment frame number should be equal or less than 4, otherwise it would be quite unnatural; and

- Deliver information about whether this is a server PLC or client PLC. If it's the server one, some simple "other PLC" like repeating CST coefficients with scrambling signs are chosen; if not, more sophisticated approach like our proposed PLC can be utilized, which will output time domain samples.

In such embodiments, multi-sine prediction-based PLC 225 may then be performed by functions accepting the two inputs: 1) Corresponding predictor tables; 2) Available sub-band coefficients located in the predictor frequency position; The output of prediction may be the same type of sub-band coefficients 235 that can either be used to transmit, decode, or guide the next packet loss concealment in case of bursty loss at 240. Notice that this multi-sine prediction only happens in the first N lost frames, depending on the rate of speech; e.g. for a quick talker, N is commonly less than 2; For the rest of bursty loss, various alternative PLC approaches 230 can be selected, depending on the specific use cases.

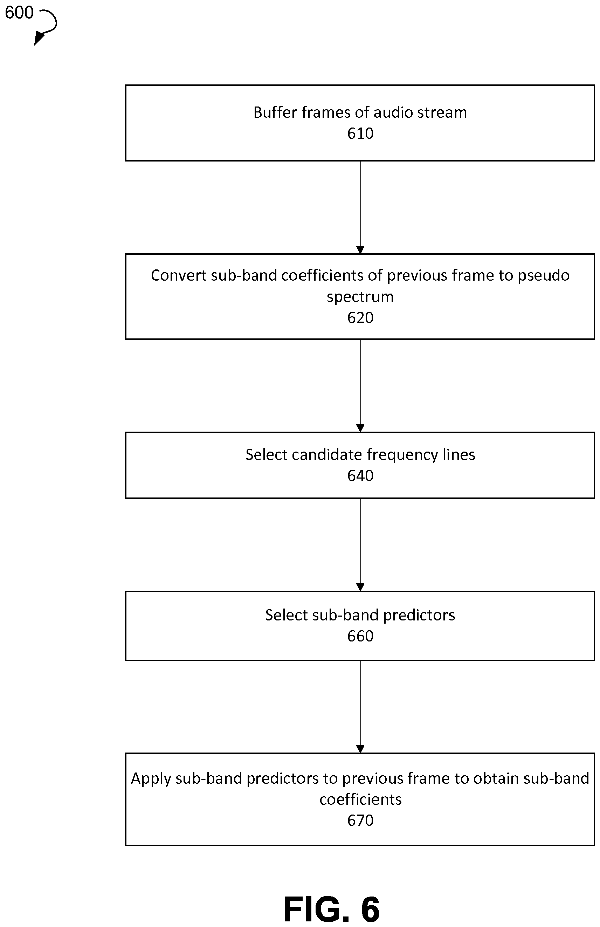

FIG. 6 shows a flow diagram for method 600 for concealing packet loss in a received audio stream using a single-frame multi-sinusoid detector, according to an embodiment. Step 610 may function substantially the same as step 110 of method 100. However, given that only previous frame is available, it is infeasible to apply the technique described in method 100. Thus, a one frame detector may be employed as an alternative to select a set of optimal sinusoid lines in the previous frame.

Here, a pseudo spectrum, which is a regularization procedure that may be less sensitive to phase shifts than original CST coefficients, may be applied to the CST coefficients at step 620, using the following exemplary formula, for example:

$$S_{p-1}[k] = (X_{p-1}^2[k] + (X_{p-1}[k+1] - X_{p-1}[k-1])^2)^{1/2} \qquad (19)$$

The pseudo spectrum may be applied to better track the frequency location of sinusoids, since the frequency localization of the coefficients with maximum amplitude does not depend as much on phase as for the original CST coefficients. Due to these properties, spectral peaks are traced in $S_{p-1}$ that satisfy:

- A distance between two successive harmonic peak distance must be equal to or greater than a predetermined threshold $Ft$ number of bins;
- The spectral peaks must have gains that are greater than a minimal volume threshold (i.e., magnitude of the pseudo spectrum coefficient at the peak) to show there is a significant harmonic at the frequency line associated with the spectral peak.

In the former condition, $Ft$ may be chosen to be 5 to ensure that both the left and right two pseudo-spectrum sub-band bins are less than the peak, since the fractional position of the bin containing the spectral peak may be exclusively impacted by the neighboring four bins around the peak. The second condition listed above may pick the significant harmonic peaks that are audible, which can also reduce the complexity. Selected frequency peaks are treated as central frequencies of sinusoid signals, around which, optimal fractional number is determined by the left and right two bins in the pseudo-spectrum. The algorithmic basis is that the neighboring amplitude will dominate real sine position leaning to which direction (to -0.5 or 0.5) and the degree (true value in [-0.5, 0.5]). For example, if $Ft = 5$, only four distances $d1, d2, d3, d4$ are calculated as follows:

$$d1 = s[k] - s[k-2]; \qquad (20)$$

$$d2 = s[k] - s[k-1]; \qquad (21)$$

$$d3 = s[k] - s[k+1]; \qquad (22)$$

$$d4 = s[k] - s[k+2]; \qquad (23)$$

Weights impacted by the two neighboring 1st and 2nd frames may be defined as w1 and w2. A single parameter w is defined, which is a proportional weight of the adjacent frequency bin's impact to the peak. The parameter w can be calculated as:

$$w = \frac{w_2}{w_1 + w_2}$$

$$(24)$$

The fractional frequency is calculated as follows in equation 26 and is rounded to the closest frequency respected to the frequency resolution. In the above formula, if w2 = 0, frequency will be decided by:

$$f = (d_1 - d_3)/2(d_1 + d_3) \qquad (25)$$

Because the true and predicted answer lie in the range between -0.5 and 0.5, a blind Monte Carlo simulation will result in an average RMSE of 0.4083, which is shown by the analytical formula in equation 27. It should be noted that, in equation 27, the integration intervals from the first stages of the calculation could have been set from 0 to 1, given that the root of the expectation of the square *difference* $E\{(X-Y)^2)\}$ is being computed for two independent uniformly distributed random variables.

$$fraction = -0.5 + \frac{d_1\omega_1 + d_2\omega_2}{(d_1 + d_3)\omega_1 + (d_2 + d_4)\omega_2}$$

$$= \frac{2d_1\omega_1 + 2d_2\omega_2 - d_1\omega_1 - d_3\omega_1 - d_2\omega_2 - d_4\omega_2}{2\omega_1(d_1 + d_3) + 2\omega_2(d_2 + d_4)}$$

$$= \frac{\omega_1(d_1 - d_3) + \omega_2(d_2 - d_4)}{2\omega_1(d_1 + d_3) + 2\omega_2(d_2 + d_4)}$$

(26)

$$RMSE = \sqrt{\int_{x=-0.5}^{0.5} \int_{y=-0.5}^{0.5} (x-y)^2 dxdy}$$

$$= \sqrt{\int_{x=-0.5}^{0.5} \int_{y=-0.5}^{0.5} (x^2 - 2xy + y^2) dxdy}$$

$$= \sqrt{\int_{x=0}^{1} \left[x^2y - xy^2 + \frac{1}{3}y^3\right]\Big|_0^1 dx}$$

$$= \sqrt{\int_{x=0}^{1} \left(x^2 - x + \frac{1}{3}\right) dx}$$

$$= \sqrt{\frac{1}{3}x^3 - \frac{1}{2}x^2 + \frac{1}{3}x \Big|_0^1}$$

$$= \sqrt{\frac{2}{3} - \frac{1}{2}} = \sqrt{\frac{1}{6}} = 0.4083$$

(27)

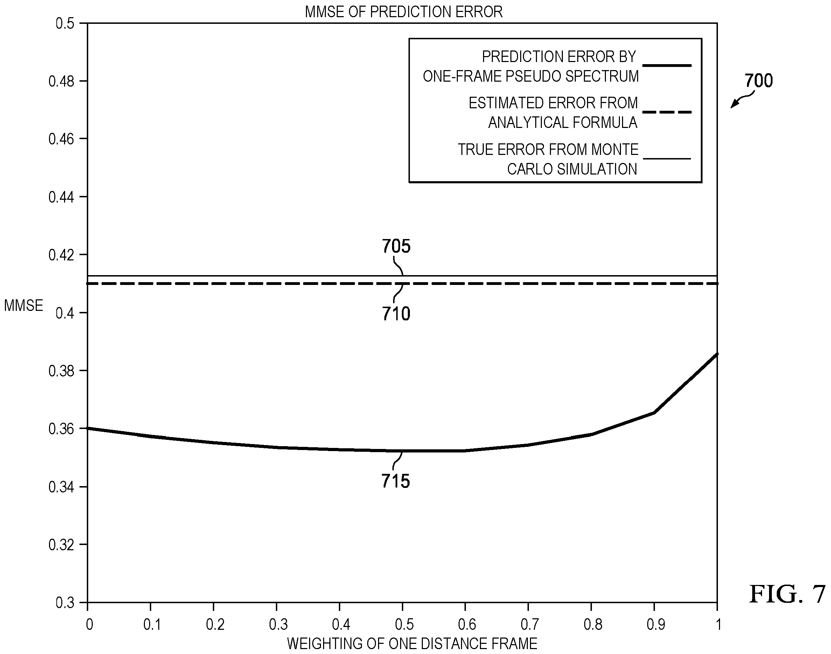

FIG. 7 shows a plot illustrating impact of weight value on prediction error in a single-frame multi-sinusoid detector, according to an embodiment. In FIG. 7, the X-axis refers to the parameter *w* and the Y-axis refers to the RMSE. Line 705, which is the Monte Carlo-derived RMSE, is quite close to the analytic formula-derived line 710. From lowest point in line 715, it can be seen that both neighboring $1^{st}$ and $2^{nd}$ frames will impact the fractional frequency ("$w=0$" means frequency is dependent on neighboring $1^{st}$ frame, and "$w=1$" means depending on neighboring $2^{nd}$ frame). From Fig.7, it can be seen that the $1^{st}$ frame will have larger impact since if w<0.5, the error is lower than what's above 0.5. In practice, a fixed weight w=0.5 (if w<0.5 the performance may not suffer from considerable drop) is chosen and used for all, which will lead to an estimated prediction error of about 0.35. However, if a two-frame detector is used, this RMSE will drop to a value that is close to the frequency resolution derived RMSE.

In conclusion, the one-frame method may be better than blind guessing, but is inferior to two frames detector unless the frequency resolution $Fp$ for two frame detector is lower than 1/0.35~=3 (In practice for speech, we often choose $Fp$ = 8 in a codec context and a much safer resolution $Fp$ = 16 can be chosen if you have enough computing power). Although one-frame detection sacrifices some prediction accuracy, it may be up to 10-20 times faster than two-frame detection in some embodiments. Other ways speed can be optimized include: reducing the frequency resolution from 32 to 8 tap (ranging from -0.5-0.5); selecting frames that contain only tonal speech to do sophisticated searching; and/or selecting major tonal bands and prioritize bands with pitch and 1st harmonic to be searched with higher resolution. Returning to FIG. 6, once multi-sine detection has taken place at steps 620-640 as described above, the selection of sub-band predictors in step 660 and application of the sub-band predictors in step 670 functions substantially the same as steps 160 and 170 of method 100.

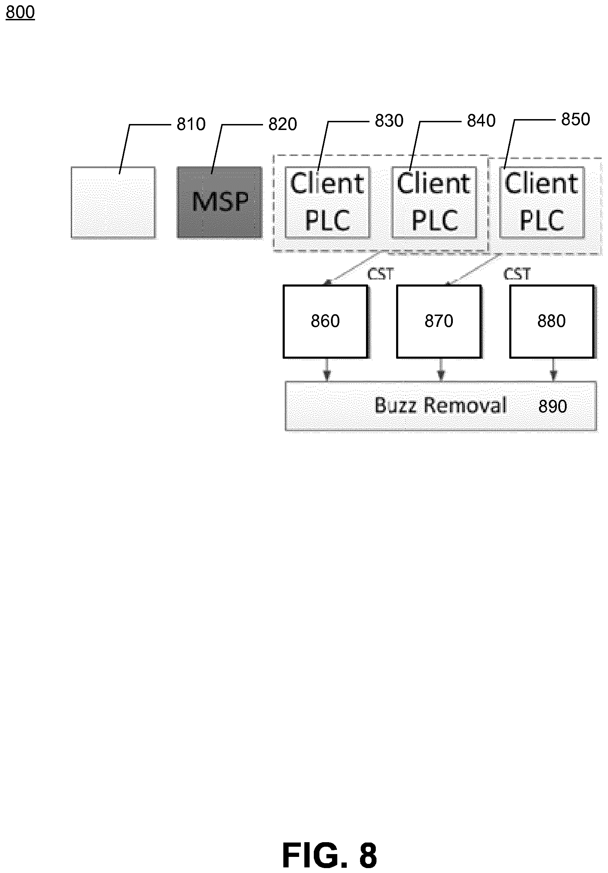

Speech signal changes rapidly in time. For bursty loss, it's recommended to perform other type of PLC after concealing first N frames (N is usually less than three), depending on the rate of speech. Otherwise, concealed speech may sound robotic and unnatural. FIG. 8 shows a simplified block diagram 800 of a plurality of frames 810-880 of an audio stream where different types of packet loss concealment are applied, according to an embodiment. In diagram 800, transmitted frame 810 is followed by frame 820, where server-side PLC has been applied (e.g., the one-frame detection based). The other types of PLC, applied by the client device, can be manipulated in any domain. If PLC is deployed in the server, and other types of PLC output time domain samples, as seen in frames 830, 840, and 850, forward CST may need to be re-applied to the samples in the time domain to output CST sub-band coefficients 860, 870, and 880 respectively. If more complexity is allowed, diffusing CST coefficients using low-pass filter and scrambling signs at block 890 may be considered to remove the buzz.

For bursty loss larger than 4 frames, if the algorithm is causal, we can simply fade out to zero. However, in most of the VoIP cases there are jitter buffers, if it's possible to access to the next arrived packet, a one-frame detection based back-ward MSP can be configured to conceal the last lost frame, the transitional CST coefficients between forward MSP and backward MSP are concealed by other sub-optimal PLC.

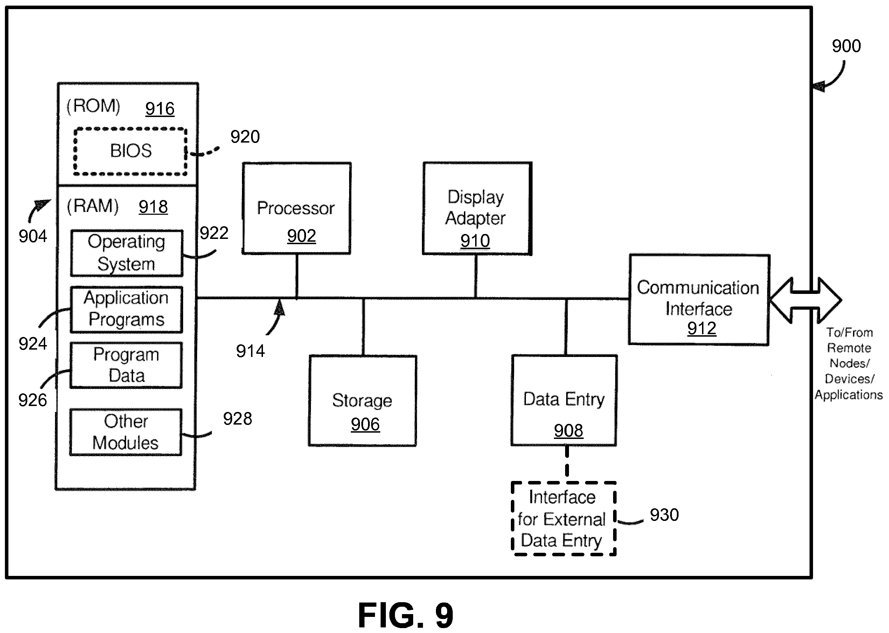

The methods and modules described above may be implemented using hardware or software running on a computing system. FIG. 9 is a block diagram of an exemplary computing system for concealing packet loss using multi-sinusoid detection according to various embodiments of the present invention. With reference to FIG. 9, an exemplary system for implementing the subject matter disclosed herein, including the methods described above, includes a hardware device 900, including a processing unit 902, memory 904, storage 906, data entry module 908, display adapter 910, communication interface 912, and a bus 914 that couples elements 904-912 to the processing unit 902.

The bus 914 may comprise any type of bus architecture. Examples include a memory bus, a peripheral bus, a local bus, etc. The processing unit 902 is an instruction execution machine, apparatus, or device and may comprise a microprocessor, a digital signal processor, a graphics processing unit, an application specific integrated circuit (ASIC), a field programmable gate array (FPGA), etc. The processing unit 902 may be configured to execute program instructions stored in memory 904 and/or storage 906 and/or received via data entry module 908.

The memory 904 may include read only memory (ROM) 916 and random access memory (RAM) 918. Memory 904 may be configured to store program instructions and data during operation of device 900. In various embodiments, memory 904 may include any of a variety of memory technologies such as static random access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example. Memory 904 may also include nonvolatile memory technologies such as nonvolatile flash RAM (NVRAM) or ROM. In some embodiments, it is contemplated that memory 904 may include a combination of technologies such as the foregoing, as well as other technologies not specifically mentioned. When the subject matter is implemented in a computer system, a basic input/output system (BIOS) 920, containing the basic routines that help to transfer information between elements within the computer system, such as during start-up, is stored in ROM 916.

The storage 906 may include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device 900.

It is noted that the methods described herein can be embodied in executable instructions stored in a non-transitory computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like may also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD™), a BLU-RAY disc; and the like.

A number of program modules may be stored on the storage 906, ROM 916 or RAM 918, including an operating system 922, one or more applications programs 924, program data 926, and other program modules 928. A user may enter commands and information into the hardware device 900 through data entry module 908. Data entry module 908 may include mechanisms such as a keyboard, a touch screen, a pointing device, etc. Other external input devices (not shown) are connected to the hardware device 900 via external data entry interface 930. By way of example and not limitation, external input devices may include a microphone, joystick, game pad, satellite dish, scanner, or the like. In some embodiments, external input devices may include video or audio input devices such as a video camera, a still camera, etc. Data entry module 908 may be configured to receive input from one or more users of device 900 and to deliver such input to processing unit 902 and/or memory 904 via bus 914.

The hardware device 900 may operate in a networked environment using logical connections to one or more remote nodes (not shown) via communication interface 912. The remote node may be another computer, a server, a router, a peer device or other common network node, and typically includes many or all of the elements described above relative to the hardware device 900. The communication interface 912 may interface with a wireless network and/or a wired network. Examples of wireless networks include, for example, a BLUETOOTH network, a wireless personal area network, a wireless 802.11 local area network (LAN), and/or wireless telephony network (e.g., a cellular, PCS, or GSM network). Examples of wired networks include, for example, a LAN, a fiber optic network, a wired personal area network, a telephony network, and/or a wide area network (WAN). Such networking environments are commonplace in intranets, the Internet, offices, enterprise-wide computer networks and the like. In some embodiments, communication interface 912 may include logic configured to support direct memory access (DMA) transfers between memory 904 and other devices.

In a networked environment, program modules depicted relative to the hardware device 900, or portions thereof, may be stored in a remote storage device, such as, for example, on a server. It will be appreciated that other hardware and/or software to establish a communications link between the hardware device 900 and other devices may be used.

It should be understood that the arrangement of hardware device 900 illustrated in FIG. 9 is but one possible implementation and that other arrangements are possible. It should also be understood that the various system components (and means) defined by the claims, described above, and illustrated in the various block diagrams represent logical components that are configured to perform the functionality described herein. For example, one or more of these system components (and means) can be realized, in whole or in part, by at least some of the components illustrated in the arrangement of hardware device 900. In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. 9. Other components may be implemented in software, hardware, or a combination of software and hardware. Moreover, some or all of these other components may be combined, some may be omitted altogether, and additional components can be added while still achieving the functionality described herein. Thus, the subject matter described herein can be embodied in many different variations, and all such variations are contemplated to be within the scope of what is claimed.

In the description above, the subject matter may be described with reference to acts and symbolic representations of operations that are performed by one or more devices, unless indicated otherwise. As such, it will be understood that such acts and operations, which are at times referred to as being computer-executed, include the manipulation by the processing unit of data in a structured form. This manipulation transforms the data or maintains it at locations in the memory system of the computer, which reconfigures or otherwise alters the operation of the device in a manner well understood by those skilled in the art. The data structures where data is maintained are physical locations of the memory that have particular properties defined by the format of the data. However, while the subject matter is being described in the foregoing context, it is not meant to be limiting as those of skill in the art will appreciate that various of the acts and operation described hereinafter may also be implemented in hardware.

For purposes of the present description, the terms "component," "module," and "process," may be used interchangeably to refer to a processing unit that performs a particular function and that may be implemented through computer program code (software), digital or analog circuitry, computer firmware, or any combination thereof.

It should be noted that the various functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, physical (non-transitory), non-volatile storage media in various forms, such as optical, magnetic or semiconductor storage media.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

In the description above and throughout, numerous specific details are set forth in order to provide a thorough understanding of the disclosure. It will be evident, however, to one of ordinary skill in the art, that the disclosure may be practiced without these specific details. In other instances, well-known structures and devices are shown in block diagram form to facilitate explanation. The description of the preferred an embodiment is not intended to limit the scope of the claims appended hereto. Further, in the methods disclosed herein, various steps are disclosed illustrating some of the functions of the disclosure. One will appreciate that these steps are merely exemplary and are not meant to be limiting in any way. Other steps and functions may be contemplated without departing from the scope as defined by the claims.

## Claims

1. A method for concealing packet loss in a received audio stream, the method comprising:

   buffering frames of the received audio stream; and
   in response to receiving a determination that a frame of the audio stream has been lost:

   identifying a plurality of candidate frequency lines, the candidate frequency lines being associated with sinusoids present in both a first frame and a second frame of the received audio stream, the first frame occurring two frames prior to the lost frame, the second frame occurring one frame prior to the lost frame, the candidate frequency lines each having frequency line positions within associated frequency bins of the first frame that include the candidate frequency lines, the associated frequency bins each being associated with a fractional frequency with respect to an absolute center frequency bin of the first frame;
   calculating prediction gains for each of the candidate frequency lines between the first frame and the second frame;
   selecting a plurality of the candidate frequency lines, the selecting being based on the calculated prediction gains of the selected candidate frequency lines;
   selecting, from a database of predictor candidates, a plurality of sub-band predictors for each selected candidate frequency line based on the frequency line positions of the selected candidate frequency lines and the fractional frequencies of the associated frequency bins that include the selected candidate frequency lines, each selected sub-band predictor being a function of frequency, the selected sub-band predictors for each selected candidate frequency line being arranged as a matrix having a size Np x Np; and
   applying the selected sub-band predictors for each selected candidate frequency line to blocks of the second frame that include the associated frequency bins of the selected candidate frequency lines to obtain predicted sub-band coefficients, the blocks of the second frame including Np frequency bins, the predicted sub-band coefficients being used to reconstruct the lost frame.

2. The method of claim 1, further comprising, when a second lost frame is detected that immediately proceeds the lost frame, using a different packet loss concealment technique to determine sub-band coefficients to fill a gap in the audio stream caused by the second lost frame of the audio stream.

3. The method of claim 1 or claim 2, wherein the first frame and the second frame each have a signal harmonicity ratio satisfying a threshold condition.

4. The method of any of the claims 1-3, the applying the selected plurality of sub-band predictors further comprising using the fractional frequencies of the associated frequency bins to determine values from each selected sub-band predictor for the selected candidate frequency lines and multiplying the determined values from each selected sub-band predictor by coefficients of the associated frequency bins in the second frame to obtain the predicted sub-band coefficients.

5. The method of any of the claims 1-4, further comprising multiplying a plurality of bins that have not been selected in the second frame by a sign scrambling function and inserting the products into the received audio stream along with the predicted sub-band coefficients in place of the lost frame.

6. The method of any of the claims 1-5, wherein the frequency line position is a fractional number between -0.5 and 0.5 associated with a selected frequency bin, the frequency line position being relative to the center bin having an absolute center frequency position of 0, the frequency line position for a selected frequency bin being an input to the selected sub-band predictors during the applying step.

7. The method of any of the claims 1-6, further comprising, when frames of the audio stream subsequent to the lost frame are also lost:

repeating the applying step recursively for two additional frames; and
using a different packet loss concealment technique after the second additional frame.

8. The method of any of the claims 1-7, further comprising analyzing the first frame and second frame to determine frame type information for each frame, the selecting the candidate frequency bins being further based on the frame type information of the first frame and the second frame.

9. A computer program product having instructions which, when executed by a computing device or system, cause said computing device or system to perform the method according to any of the claims 1-8.

10. A data-processing system configured to perform the method according to any of the claims 1-8.

**Patentansprüche**

1. Verfahren zum Verdecken von Paketverlusten in einem empfangenen Audiostream, wobei das Verfahren folgende Schritte umfasst:

Puffern von Rahmen des empfangenen Audiostreams; und
als Reaktion auf das Empfangen einer Bestimmung, dass ein Rahmen des Audiostreams verloren gegangen ist:

Identifizieren einer Vielzahl von Kandidatenfrequenzlinien, wobei die Kandidatenfrequenzlinien mit Sinuskurven verknüpft sind, die sowohl in einem ersten Rahmen als auch in einem zweiten Rahmen des empfangenen Audiostreams vorhanden sind, wobei der erste Rahmen zwei Rahmen vor dem verlorenen Rahmen vorkommt, wobei der zweite Rahmen einen Rahmen vor dem verlorenen Rahmen vorkommt, wobei die Kandidatenfrequenzlinien jeweils Frequenzlinienpositionen innerhalb von verknüpften Frequenzbereichswerten des ersten Rahmens aufweisen, welche die Kandidatenfrequenzlinien umfassen, wobei die verknüpften Frequenzbereichswerte jeweils mit einer Bruchteilfrequenz im Verhältnis zu einem absoluten Mittenfrequenzbereichswert des ersten Rahmens verknüpft sind;
Berechnen von Vorhersageverstärkungen für jede der Kandidatenfrequenzlinien zwischen dem ersten Rahmen und dem zweiten Rahmen;
Auswählen einer Vielzahl der Kandidatenfrequenzlinien, wobei das Auswählen auf den berechneten Vorhersageverstärkungen der ausgewählten Kandidatenfrequenzlinien basiert;
Auswählen, aus einer Datenbank von Prädiktorkandidaten, einer Vielzahl von Teilbandprädiktoren für jede ausgewählte Kandidatenfrequenzlinie basierend auf den Frequenzlinienpositionen der ausgewählten Kandidatenfrequenzlinien und den Bruchteilfrequenzen der verknüpften Frequenzbereichswerte, welche die ausgewählten Kandidatenfrequenzlinien umfassen, wobei jeder ausgewählte Teilbandprädiktor eine Funktion der Frequenz ist, wobei die ausgewählten Teilbandprädiktoren für jede ausgewählte Kandidatenfrequenzlinie als eine Matrix, die eine Größe von Np x Np aufweist, angeordnet sind; und
Anwenden der ausgewählten Teilbandprädiktoren für jede ausgewählte Kandidatenfrequenzlinie auf Blöcke des zweiten Rahmens, welche die verknüpften Frequenzbereichswerte der ausgewählten Kandidatenfrequenzlinien umfassen, um vorhergesagte Teilbandkoeffizienten zu erzielen, wobei die Blöcke des zweiten Rahmens Np Frequenzbereichswerte umfassen, wobei die vorhergesagten Teilbandkoeffizienten verwendet werden, um den verlorenen Rahmen wiederherzustellen.

2.  Verfahren nach Anspruch 1, ferner umfassend, wenn ein zweiter verlorener Rahmen detektiert wird, der dem verlorenen Rahmen direkt vorhergeht, das Verwenden einer anderen Technik zum Verdecken von Paketverlusten, um Teilbandkoeffizienten zu bestimmen, um eine Lücke in dem Audiostream zu füllen, die durch den zweiten verlorenen Rahmen des Audiostreams verursacht wird.

3.  Verfahren nach Anspruch 1 oder 2, wobei der erste Rahmen und der zweite Rahmen jeweils ein Signalharmonizitätsverhältnis aufweisen, das eine Schwellenbedingung erfüllt.

4.  Verfahren nach einem der Ansprüche 1 bis 3, wobei das Anwenden der ausgewählten Vielzahl von Teilbandprädiktoren ferner das Verwenden der Bruchteilfrequenzen der verknüpften Frequenzbereichswerte, um Werte von jedem ausgewählten Teilbandprädiktor für die ausgewählten Kandidatenfrequenzlinien zu bestimmen, und das Multiplizieren der bestimmten Werte von jedem ausgewählten Teilbandprädiktor mit Koeffizienten der verknüpften Frequenzbereichswerte in dem zweiten Rahmen, um die vorhergesagten Teilbandkoeffizienten zu erzielen, umfasst.

5.  Verfahren nach einem der Ansprüche 1 bis 4, ferner umfassend das Multiplizieren einer Vielzahl von Bereichswerten, die nicht in dem zweiten Rahmen ausgewählt wurden, mit einer Vorzeichenverwürfelungsfunktion und das Einfügen der Produkte in den empfangenen Audiostream zusammen mit den vorhergesagten Teilbandkoeffizienten anstelle des verlorenen Rahmens.

6.  Verfahren nach einem der Ansprüche 1 bis 5, wobei die Frequenzlinienposition eine Bruchzahl zwischen -0,5 und 0,5 ist, die mit einem ausgewählten Frequenzbereichswert verknüpft ist, wobei sich die Frequenzlinienposition auf den mittleren Bereichswert bezieht, der eine absolute Mittenfrequenzposition von 0 aufweist, wobei die Frequenzlinienposition für einen ausgewählten Frequenzbereichswert eine Eingabe in die ausgewählten Teilbandprädiktoren während des Anwendungsschritts ist.

7.  Verfahren nach einem der Ansprüche 1 bis 6, ferner umfassend, wenn Rahmen des Audiostreams, die auf den verlorenen Rahmen folgen, ebenfalls verloren gehen:

    rekursives Wiederholen des Anwendungsschritts für zwei zusätzliche Rahmen; und
    Verwenden einer anderen Technik zum Verdecken von Paketverlusten nach dem zweiten zusätzlichen Rahmen.

8.  Verfahren nach einem der Ansprüche 1 bis 7, ferner umfassend das Analysieren des ersten Rahmens und des zweiten Rahmens, um Rahmentypinformationen für jeden Rahmen zu bestimmen, wobei das Auswählen der Kandidatenfrequenzbereichswerte ferner auf den Rahmentypinformationen des ersten Rahmens und des zweiten Rahmens basiert.

9.  Computerprogrammprodukt mit Anweisungen, die, wenn sie von einer Rechenvorrichtung oder einem Rechensystem ausgeführt werden, bewirken, dass die Rechenvorrichtung oder das Rechensystem das Verfahren nach einem der Ansprüche 1 bis 8 ausführt.

10. Datenverarbeitungssystem, das konfiguriert ist, um das Verfahren nach einem der Ansprüche 1 bis 8 auszuführen.

**Revendications**

1.  Procédé de dissimulation de perte de paquets dans un flux audio reçu, le procédé comprenant :

    la mise en mémoire tampon de trames du flux audio reçu ; et
    en réponse à la réception d'une détermination qu'une trame du flux audio reçu a été perdue :

        l'identification d'une pluralité de lignes de fréquence candidates, les lignes de fréquence candidates étant associées à des sinusoïdes présentes à la fois dans une première trame et une seconde trame du flux audio reçu, la première trame survenant deux trames avant la trame perdue, la seconde trame survenant une trame avant la trame perdue, les lignes de fréquence candidates ayant chacune des positions de ligne de fréquence dans des segments de fréquence associés de la première trame qui incluent les lignes de fréquence candidates, les segments de fréquence associés étant associés chacun à une fréquence fractionnaire par rapport à un segment de fréquence centrale absolue de la première trame ;

le calcul de gains de prédiction pour chacune des lignes de fréquence candidates entre la première trame et la seconde trame ;

la sélection d'une pluralité de lignes de fréquence candidates, la sélection étant basée sur les gains de prédiction calculés des lignes de fréquence candidates sélectionnées ;

la sélection, à partir d'une base de données de candidats de prédicteurs, d'une pluralité de prédicteurs de sous-bande pour chaque ligne de fréquence candidate sélectionnée sur la base des positions de ligne de fréquence des lignes de fréquence candidates sélectionnées et des fréquences fractionnaires des segments de fréquence associés qui incluent les lignes de fréquence candidates sélectionnées, chaque prédicteur de sous-bande sélectionné étant une fonction de fréquence, les prédicteurs de sous-bande sélectionnés pour chaque ligne de fréquence candidate sélectionnée étant agencés comme une matrice ayant une taille Np x Np ; et

l'application des prédicteurs de sous-bande sélectionnés pour chaque ligne de fréquence candidate sélectionnée à des blocs de la seconde trame qui incluent les segments de fréquence associés des lignes de fréquence candidates sélectionnées pour obtenir des coefficients de sous-bande prédits, les blocs de la seconde trame incluant Np segments de fréquence, les coefficients de sous-bande prédits étant utilisés pour reconstruire la trame perdue.

2. Procédé selon la revendication 1, comprenant en outre, quand une seconde trame perdue est détectée qui continue immédiatement la trame perdue, l'utilisation d'une technique différente de dissimulation de perte de paquets pour déterminer des coefficients de sous-bande pour remplir un espace dans le flux audio provoqué par la seconde trame perdue du flux audio.

3. Procédé selon la revendication 1 ou la revendication 2, dans lequel la première trame et la seconde trame ont chacune un rapport d'harmonicité de signal satisfaisant une condition de seuil.

4. Procédé selon l'une quelconque des revendications 1 à 3, l'application de la pluralité de prédicteurs de sous-bande comprenant en outre l'utilisation de fréquences fractionnaires des segments de fréquence associés pour déterminer des valeurs à partir de chaque prédicteur de sous-bande sélectionné pour les lignes de fréquence candidates sélectionnées et la multiplication des valeurs déterminées à partir de chaque prédicteur de sous-bande sélectionné par des coefficients des segments de fréquence associés dans la seconde trame pour obtenir les coefficients de sous-bande prédits.

5. Procédé selon l'une quelconque des revendications 1 à 4, comprenant en outre la multiplication d'une pluralité de groupes qui n'ont pas été sélectionnés dans la seconde trame par une fonction d'embrouillage de signes et l'insertion des produits dans le flux audio reçu conjointement aux coefficients de sous-bande prédits à la place de la trame perdue.

6. Procédé selon l'une quelconque des revendications 1 à 5, dans lequel la position de ligne de fréquence est un nombre fractionnaire entre -0,5 et 0,5 associé à un segment de fréquence sélectionné, la position de ligne de fréquence étant relative au segment central ayant une position de fréquence centrale absolue de 0, la position de ligne de fréquence pour un segment de fréquence sélectionné étant une entrée pour les prédicteurs de sous-bande sélectionnés durant l'étape d'application.

7. Procédé selon l'une quelconque des revendications 1 à 6, comprenant en outre, quand des trames du flux audio subséquentes à la trame perdue sont également perdues :

la répétition de l'étape d'application de manière récursive pour deux trames additionnelles ; et
l'utilisation d'une technique de dissimulation de perte de paquets différente après la seconde trame additionnelle.

8. Procédé selon l'une quelconque des revendications 1 à 7, comprenant en outre l'analyse de la première trame et la seconde trame pour déterminer des informations de type de trame pour chaque trame, la sélection des segments de fréquence candidats étant basé en outre sur les informations de type de trame de la première trame et la seconde trame.

**9.** Produit de programme informatique comportant des instructions qui, quand elles sont exécutées par un dispositif ou système informatique, amènent ledit dispositif ou système informatique à réaliser le procédé selon l'une quelconque des revendications 1 à 8.

**10.** Système de traitement de données configuré pour réaliser le procédé selon l'une quelconque des revendications 1 à 8.

100

```
┌─────────────────────────────────────────────────┐
│          Buffer frames of audio stream          │
│                      110                        │
└─────────────────────────────────────────────────┘
                        │
                        ▼
┌─────────────────────────────────────────────────┐
│     Identify sinusoids in both first and second frame    │
│                      120                        │
└─────────────────────────────────────────────────┘
                        │
                        ▼
┌─────────────────────────────────────────────────┐
│  Calculate gain of candidate frequency lines between first and  │
│                  second frame                   │
│                      140                        │
└─────────────────────────────────────────────────┘
                        │
                        ▼
┌─────────────────────────────────────────────────┐
│          Select candidate frequency lines          │
│                      150                        │
└─────────────────────────────────────────────────┘
                        │
                        ▼
┌─────────────────────────────────────────────────┐
│            Select sub-band predictors            │
│                      160                        │
└─────────────────────────────────────────────────┘
                        │
                        ▼
┌─────────────────────────────────────────────────┐
│  Apply sub-band predictors to second frame to obtain sub-band  │
│                  coefficients                   │
│                      170                        │
└─────────────────────────────────────────────────┘
```

# FIG. 1

200

205 De-quantize

210 Predictor Candidates

215 Multi-sine Detection

220 Context Detection

225 Multi-sine PLC

230 Other PLC

235 Sub-band Coefficients

240 Transmit or decode

**FIG. 2**

**FIG. 3**

**FIG. 4**

FIG. 5

600

```
┌─────────────────────────────────────────────────┐
│         Buffer frames of audio stream            │
│                     610                          │
└─────────────────────────────────────────────────┘
                         │
                         ▼
┌─────────────────────────────────────────────────┐
│ Convert sub-band coefficients of previous frame  │
│              to pseudo spectrum                  │
│                     620                          │
└─────────────────────────────────────────────────┘
                         │
                         ▼
┌─────────────────────────────────────────────────┐
│         Select candidate frequency lines         │
│                     640                          │
└─────────────────────────────────────────────────┘
                         │
                         ▼
┌─────────────────────────────────────────────────┐
│            Select sub-band predictors            │
│                     660                          │
└─────────────────────────────────────────────────┘
                         │
                         ▼
┌─────────────────────────────────────────────────┐
│ Apply sub-band predictors to previous frame to   │
│          obtain sub-band coefficients            │
│                     670                          │
└─────────────────────────────────────────────────┘
```

# FIG. 6

MMSE OF PREDICTION ERROR

FIG. 7

EP 3 454 336 B1

<u>800</u>

FIG. 8

**FIG. 9**

EP 3 454 336 B1

## REFERENCES CITED IN THE DESCRIPTION

**Patent documents cited in the description**

- WO 2014202770 A1

- WO 2014108393 A1

**Non-patent literature cited in the description**

- Technical Specification Group Services and System Aspects; Codec for Enhanced Voice Services (EVS); Error Concealment of Lost Packets (Release 12). 3GPP DRAFT; 26447-C70. 3rd Generation Partnership Project
- **DAUDET L et al.** MDCT Analysis of Sinusoids: Exact Results and Applications to Coding Artifacts Reduction. *IEEE TRANSACTIONS ON SPEECH AND AUDIO PROCESSING,* vol. 12 (3

- General audio codec audio processing functions; Enhanced aacPlus general audio codec; Floating point ANSI-C code. *3GPP TS 26.410,* January 2005
- **SUN, XUEJING.** Pitch Determination and Voice Quality Analysis using Subharmonic-to-Harmonic Ration. *International Conference on Acoustics, Speech, and Signal Processing,* 2002